# EUROPEAN PATENT APPLICATION

(11) **EP 4 465 684 A1**
(43) Date of publication of application: **20.11.2024**
(21) Application number: 22919374.3
(22) Date of filing: 11.01.2022
(51) Int. Cl.: H04W 24/10

(54) **INFORMATION REPORTING METHOD AND APPARATUS, INFORMATION RECEIVING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/071461
(87) International publication number: WO 2023/133708

(57) **Abstract**

The present application relates to the field of mobile communication. Disclosed are an information reporting method and apparatus, an information receiving method and apparatus, a device, and a storage medium. The method includes: a terminal sends channel state information to a network device, the channel state information indicating phase information and/or amplitude information of at least two access network devices, and indicating phase information and/or amplitude information of each access network device in the at least two access network devices, thereby ensuring that the phase and/or amplitude of each access network device is determined. The transmission performance is improved, and signaling overheads are saved.

## Description

### FIELD

The present invention relates to the field of communication technologies, and particularly to a method for reporting information, a method for receiving information, an apparatus, a device, and a storage medium.

### BACKGROUND

In the mobile communication technology, at least one access network device may provide service(s) for the terminal, and the terminal may report a measurement result to the access network device through measured channel state information (CSI). Since the reported CSI includes an antenna port of an access network device, when multiple access network devices provide services for the terminal, how to report parameters corresponding to antenna ports of the multiple access network devices is a problem that needs to be solved.

### SUMMARY

Embodiments of the present invention provide a method for reporting information, a method for receiving information, an apparatus, a device and a storage medium to ensure that phase and/or amplitude of each access network device is determined, which not only improves transmission performance, but also saves signaling overhead. Described technical solution is as follows.

According to an aspect of the present invention, a method for reporting information is provided. The method is performed by a terminal, and the method includes: sending channel state information to a network device, where the channel state information indicates phase information and/or amplitude information of at least two access network devices.

According to an aspect of the present invention, a method for reporting information is provided. The method is performed by a network device, and the method includes: receiving channel state information sent by a terminal, where the channel state information indicates phase information and/or amplitude information of at least two access network devices.

According to an aspect of the present invention, an apparatus for reporting information is provided. The apparatus includes a sending module configured to send channel state information to a network device, where the channel state information indicates phase information and/or amplitude information of at least two access network devices.

According to an aspect of the present invention, an apparatus for receiving information is provided. The apparatus includes a receiving module configured to receive channel state information sent by a terminal, where the channel state information indicates phase information and/or amplitude information of at least two access network devices.

According to an aspect of the present invention, a terminal is provided. The terminal includes a processor, a transceiver coupled to the processor, and a memory for storing instructions executable by the processor. The processor is configured to load and perform the executable instructions to implement the method for reporting the information as described in the above aspect.

According to an aspect of the present invention, a network device is provided. The network device includes a processor, a transceiver coupled to the processor, and a memory for storing instructions executable by the processor. The processor is configured to load and perform the executable instructions to implement the method for receiving the information as described in the above aspect.

According to an aspect of the present invention, there is provided a computer readable storage medium having stored therein executable program codes that, when loaded and performed by a processor, implement the method for reporting the information or the method for receiving the information as described in the above aspect.

According to an aspect of the present invention, a chip is provided. The chip includes a programmable logic circuit and/or program instructions, and when the chip is run on a terminal or a network device, it is configured to implement the method for reporting the information or the method for receiving the information as described in the above aspect.

According to an aspect of the present invention, there is a computer program product that, when executed by a processor of a terminal or a network device, causes the method for reporting the information in the above aspect or the method for receiving the information in the above aspect to be implemented.

The embodiments of the present invention provide a method for reporting information. The terminal reports the channel state information to the network device, so as to indicate the phase information and/or amplitude information of each access network device in the at least two access network devices, thereby ensuring that the network device determines the phase and/or amplitude of each access network device, which not only improves the transmission performance, but also saves the signaling overhead.

### BRIEF DESCRIPTION OF THE DRAWINGS

In order to more clearly illustrate technical solutions in the embodiments of the present invention, the drawings that need to be used in the description of the embodiments will be briefly introduced below. The drawings in the following description are only for some embodiments of the present invention. For those skilled in the art, other drawings may be obtained based on these drawings without inventive work.
FIG. 1 is a block diagram of a communication system provided by an illustrative embodiment of the present invention;
FIG. 2 is a flowchart of a method for reporting information provided by an illustrative embodiment of the present invention;
FIG. 3 is a flowchart of a method for reporting information provided by another illustrative embodiment of the present invention;
FIG. 4 is a flowchart of a method for receiving information provided by an illustrative embodiment of the present invention;
FIG. 5 is a block diagram of an apparatus for reporting information provided by an illustrative embodiment of the present invention;
FIG. 6 is a block diagram of an apparatus for receiving information provided by an illustrative embodiment of the present invention;
FIG. 7 is a schematic structural diagram of a communication device provided by an illustrative embodiment of the present invention.

### DETAILED DESCRIPTION

In order to make objects, technical solutions and advantages of the present invention clearer, implementations of the present invention will be further described in detail below in combination with the accompanying drawings.

Reference will now be made in detail to the illustrative embodiments, examples of which are illustrated in the accompanying drawings. The following description refers to the accompanying drawings in which the same reference numerals in different drawings represent the same or similar elements unless otherwise represented. The implementations set forth in the following description of the embodiments do not represent all implementations in line with the present invention. They are merely examples of apparatuses and methods consistent with aspects of the present invention as recited in the appended claims.

Terms used in the present invention are only for the purpose of describing specific embodiments, but should not be construed to limit the embodiments of the present invention. As used in the present invention and the appended claims, the singular forms "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if' may be construed to mean "when" or "upon" or "in response to determining" depending on the context.

Application scenarios of the present invention are described below.

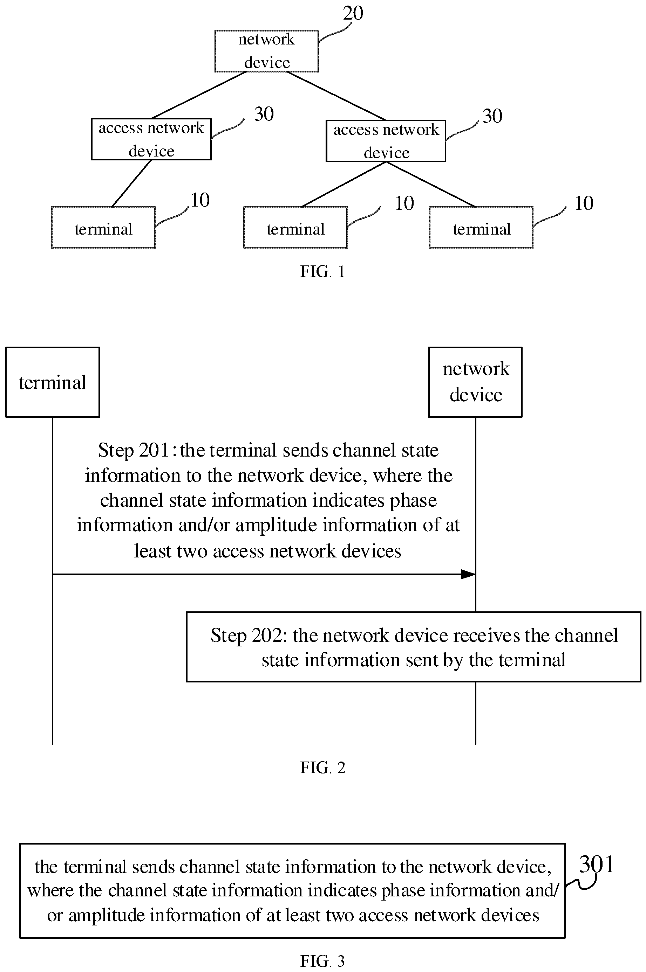

FIG. 1 is a block diagram of a communication system provided by an illustrative embodiment of the present invention. The communication system may include: a terminal 10, a network device 20 and an access network device 30.

Generally, there are multiple terminals 10, and one or more terminals 10 may be distributed in a cell managed by one network device 20. The terminal 10 may include various devices having wireless communication functions, such as handheld devices, vehicle-mounted devices, wearable devices, computing devices or other processing devices connected to a wireless modem, as well as various forms of user equipment (UE), and mobile station (MS). For convenience of description, in the embodiments of the present invention, the above-mentioned devices are collectively referred to as terminals.

The network device 20 is a device deployed in the access network to provide the terminal 10 with a wireless communication function. For the convenience of description, in the embodiments of the present invention, the above-mentioned devices that provide the wireless communication function for the terminal 10 are collectively referred to as network devices. A connection may be established between the network device 20 and the terminal 10 through radio, so as to realize the communication (including signaling and data interaction) through the connection. The number of network devices 20 may be more than one, and the communication between two adjacent network devices 20 may be performed in a wired or wireless manner. The terminal 10 may switch to different network devices 20, that is, establish connections with different network devices 20.

The network device 20 may include macro base stations, micro base stations, relay stations, and access points in various forms. In systems using different radio access technologies, the names of devices having network device functions may be different, for example, in the SGNR system, they are called gNodeB or gNB. The term "network device" may change as the communication technology evolves.

The network device 20 includes at least one access network device 30 through which the terminal 10 is provided with the communication function. That is, the network device 20 expands the coverage by configuring the access network device 30 so that more terminals 10 are connected to the network device 20.

In some embodiments, the access network device 30 is a transmission reception point (TRP) device or a transmission point (TP), or a remote radio header (RRH), or a panel.

FIG. 2 is a flowchart of a method for reporting information provided by an illustrative embodiment of the present invention, which may be applied to the terminal and the network device as shown in FIG. 1, and the method includes at least part of the following contents.

In block 201, the terminal sends channel state information to a network device, where the channel state information indicates phase information and/or amplitude information of at least two access network devices.

In embodiments of the present invention, the network device configures at least one access network device to provide service(s) for the terminal. Each access network device has a corresponding phase and amplitude, and the terminal may indicate the phase information and/or amplitude information of at least two access network devices by sending channel state information.

The terminal will perform measurements based on channel state information-reference signal (CSI-RS) and/or synchronization signal and PBCH block (SSB) sent by the network device, to obtain the channel state information measured according to at least one resource. The channel state information indicates the obtained phase information and/or amplitude information of the at least two access network devices, to inform the network device of the phase information and/or the amplitude information of the at least two access network devices.

In block 202: the network device receives the channel state information sent by the terminal.

In the embodiments of the present invention, the network device may determine the phase information and/or amplitude information of the at least two access network devices reported by the terminal according to the received channel state information, which ensures that the network device knows the phase information and/or the amplitude information of every access network device of the at least two access network devices.

In some embodiments, each access network device has an access network device identifier. The identifier corresponding to each access network device is indicated by at least one of a resource index, a resource subset index, a resource set index, a control resource set pool index, an antenna port index, a TRP index, a TP index, an RRH index, an antenna panel index.

It should be noted that, the embodiments of the present invention are described with an example of the antenna port. In another embodiment, an antenna port and a CSI-RS port or a CSI-RS antenna port may be equivalently replaced, which is not limited in the embodiments of the present invention.

It should be noted that the steps performed by the terminal in the embodiments of the present invention may be implemented independently to form a new embodiment, and the steps performed by the network device may be implemented independently to form a new embodiment.

The embodiments of the present invention provide a method for reporting information. The terminal reports the channel state information to the network device, so as to indicate the phase information and/or amplitude information of each access network device in the at least two access network devices, thereby ensuring that the network device determines the phase and/or amplitude of each access network device, which not only improves the transmission performance, but also saves the signaling overhead.

Optionally, on the basis of the embodiments shown in FIG. 2, the phase of the access network device is indicated by two types of phase coefficients.

In some embodiments, the phase information includes a first-type phase coefficient and a second-type phase coefficient, where the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine the phase of each element in each access network device.

In the embodiments of the present invention, the first-type phase coefficient is indicated in a dimension of the access network device, that is, the phase coefficient corresponding to each access network device. It can also be understood that the first-type phase coefficient is a phase coefficient shared by all elements of the access network device. The second-type phase coefficient is indicated in a dimension of an element of the access network device, that is, the phase coefficient corresponding to each element, and it can also be understood that the second-type phase coefficient is a phase coefficient corresponding to each element individually.

The phase corresponding to each element in the access network device is indicated by the first-type phase coefficient and the second-type phase coefficient included in the phase information.

In some embodiments, a product of the first-type phase coefficient and the second-type phase coefficient is a phase corresponding to each element in the access network device.

The first-type phase coefficient indicates the phase coefficient shared by the elements in each access network device, and the second-type phase coefficient indicates the phase coefficient corresponding to each element individually. In order to determine the phase of each element in the access network device, the product of the first-type phase coefficient and the second-type phase coefficient is determined as the phase corresponding to each element in the access network device.

In some other embodiments, a sum of the first-type phase coefficient and the second-type phase coefficient is a phase corresponding to each element in the access network device.

The first-type phase coefficient indicates the phase coefficient shared by the elements in each access network device, and the second-type phase coefficient indicates the phase coefficient corresponding to each element individually. In order to determine the phase of each element in the access network device, the sum of the first-type phase coefficient and the second-type phase coefficient is determined as the phase corresponding to each element in the access network device.

In some embodiments, the element includes at least one of the following or a combination of more than one of the following: (1) an antenna port; (2) a beam; (3) a wideband; (4) a subband; (5) a frequency domain unit; or (6) a time domain unit.

It should be noted that, the embodiments of the present invention are described with an example of the second-type phase coefficient. In another embodiment, the second-type phase coefficient is divided according to elements.

Optionally, an interval between second-type phase coefficients corresponding to two adjacent elements in each of the at least two access network devices is a first interval, and/or an interval between second-type phase coefficients corresponding to two adjacent elements of two adjacent access network devices is the first interval.

In the embodiments of the present invention, for each of the at least two access network devices, multiple elements included in each access network device are arranged in sequence, and the interval between the second-type phase coefficients corresponding to two adjacent elements is the first interval.

In addition, the at least two access network devices include two adjacent access network devices, and the interval between the second-type phase coefficients corresponding to two adjacent elements of two adjacent access network devices is the first interval. In other words, for two adjacent access network devices, an interval between a second-type phase coefficient corresponding to the last element in an access network device at front and a second-type phase coefficient corresponding to the first element in an access network device at rear is the first interval.

For example, a target includes two access network devices, i.e., access network device 1 and access network device 2, access network device 1 includes element 1, element 2 and element 3, and access network device 2 includes element 4, element 5 and element 6. In this case, an interval between a second-type phase coefficient corresponding to element 3 in access network device 1 and a second-type phase coefficient corresponding to element 4 in access network device 2 is the first interval.

In some embodiments, the first interval is related to the number of elements in the access network device. For example, the first interval is 2pi/Nl, where N1 represents the number of elements in the access network device, or a half of the number of elements in the access network device, or is related to the number of elements.

For example, a difference between second-type phase coefficients corresponding to two adjacently numbered antenna ports of an access network device is 2pi/N1, where N1 is related to the number of antenna ports in the access network device. N1 is the number of antenna ports in the access network device, or is a half of the number of antenna ports in the access network device, or is related to the number of antenna ports.

In the method provided by the embodiments of the present invention, the phase information includes the first-type phase coefficient and the second-type phase coefficient, and the phase of each element in each access network device may be determined according to the first-type phase coefficient and the second-type phase coefficient, which not only improves the transmission performance, but also saves the signaling overhead.

In addition, the phase information in the embodiments of the present invention may be at least one of a wideband phase coefficient and a subband phase coefficient.

The wideband refers to the entire bandwidth. The entire bandwidth may be divided into a plurality of subbands. When the bandwidth is 24 - 72 physical resource blocks (PRBs), a size of the subband is 4 or 8 PRBs. When the bandwidth is 73 - 144 PRBs, a size of the subband is 8 or 16 PRBs. When the bandwidth is 145 - 275 PRBs, a size of the subband is 16 or 32 PRBs.

It should be noted that, the above embodiments are only described by taking the phase information including the first-type phase coefficient and the second-type phase coefficient as an example for illustration. In another embodiment, the phase information may include phases of different elements in the at least two access network devices, and an interval between phases corresponding to any two adjacent elements in the at least two access network devices is a target interval.

In embodiments of the present invention, the phases included in the phase information are the phases corresponding to different elements in each access network device, so a corresponding phase may be determined for every element in the access network device, and there will be an interval between phases corresponding to any two elements, and the interval between the phases corresponding to any two adjacent elements is the target interval. That is, the phases corresponding to different elements in the access network device are distributed at equal intervals.

Optionally, the target interval is related to the number of elements in the access network device. For example, the target interval is 2pi/N1, where N1 is the number of elements in the access network device, or is a half of the number of elements in the access network device, or is related to the number of elements.

With the method provided in the embodiments of the present invention, the phase of each element in each access network device may be indicated according to the phase of each element included in the phase information, which not only improves the transmission performance, but also saves the signaling overhead.

Optionally, on the basis of the embodiments shown in FIG. 2, an amplitude of the access network device is indicated by two types of amplitude coefficients.

In some embodiments, the amplitude information includes a first-type amplitude coefficient and a second-type amplitude coefficient, where the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

In the embodiments of the present invention, the first-type amplitude coefficient is indicated in a dimension of the access network device, that is, the amplitude coefficient corresponding to each access network device. It can also be understood that the first-type amplitude coefficient is an amplitude coefficient shared by all elements of the access network device. The second-type amplitude coefficient is indicated in a dimension of an element of the access network device, that is, the amplitude coefficient corresponding to each element, and it can also be understood that the second-type amplitude coefficient is an amplitude coefficient corresponding to each element individually.

The amplitude corresponding to each element in the access network device is indicated by the first-type amplitude coefficient and the second-type amplitude coefficient included in the amplitude information.

In some embodiments, a product of the first-type amplitude coefficient and the second-type amplitude coefficient is an amplitude corresponding to each element in the access network device.

The first-type amplitude coefficient indicates the amplitude coefficient shared by the elements in each access network device, and second-type amplitude coefficient indicates the amplitude coefficient corresponding to each element individually. In order to determine the amplitude of each element in the access network device, the product of the first-type amplitude coefficient and the second-type amplitude coefficient is determined as the amplitude corresponding to each element in the access network device.

In some other embodiments, a sum of the first-type amplitude coefficient and the second-type amplitude coefficient is an amplitude corresponding to each element in the access network device.

The first-type amplitude coefficient indicates the amplitude coefficient shared by the elements in each access network device, and the second-type amplitude coefficient indicates the amplitude coefficient corresponding to each element individually. In order to determine the amplitude of each element in the access network device, the sum of the first-type amplitude coefficient and the second-type amplitude coefficient is determined as the amplitude corresponding to each element in the access network device.

In some embodiments, the element includes at least one of the following or a combination of more than one of the following: (1) an antenna port; (2) a beam; (3) a wideband; (4) a subband; (5) a frequency domain unit; or (6) a time domain unit.

It should be noted that, the embodiments of the present invention are described with an example of the second-type amplitude coefficient. In another embodiment, the second-type amplitude coefficient is divided according to elements.

Optionally, an interval between second-type amplitude coefficients corresponding to two adjacent elements in each of the at least two access network devices is a second interval, and/or an interval between second-type amplitude coefficients corresponding to two adjacent elements of two adjacent access network devices is the second interval.

In the embodiments of the present invention, for each of the at least two access network devices, multiple elements included in each access network device are arranged in sequence, and the interval between the second-type amplitude coefficients corresponding to two adjacent elements is the second interval.

In addition, the at least two access network devices include two adjacent access network devices, and the interval between the second-type amplitude coefficients corresponding to two adjacent elements of two adjacent access network devices is the second interval. In other words, for two adjacent access network devices, an interval between a second-type amplitude coefficient corresponding to the last element in an access network device at front and a second-type amplitude coefficient corresponding to the first element in an access network device at rear is the second interval.

For example, a target includes two access network devices, i.e., access network device 1 and access network device 2, access network device 1 includes element 1, element 2 and element 3, and access network device 2 includes element 4, element 5 and element 6. In this case, an interval between a second-type amplitude coefficient corresponding to element 3 in access network device 1 and a second-type amplitude coefficient corresponding to element 4 in access network device 2 is the second interval.

In some embodiments, the second interval is related to the number of elements in the access network device. For example, the second interval is total amplitude/N1, where N1 represents the number of elements in the access network device, or a half of the number of elements in the access network device, or is related to the number of elements.

For example, a difference between second-type amplitude coefficients corresponding to two adjacently numbered antenna ports of an access network device is total amplitude/N1, where N1 is related to the number of antenna ports in the access network device. N1 is the number of antenna ports in the access network device, or is a half of the number of antenna ports in the access network device, or is related to the number of antenna ports.

In the method provided by the embodiments of the present invention, the amplitude information includes the first-type amplitude coefficient and the second-type amplitude coefficient, and the amplitude of each element in each access network device may be determined according to the first-type amplitude coefficient and the second-type amplitude coefficient, which not only improves the transmission performance, but also saves the signaling overhead.

It should be noted that, the above embodiments are only described by taking the amplitude information including the first-type amplitude coefficient and the second-type amplitude coefficient as an example for illustration. In another embodiment, the amplitude information may include amplitudes of different elements in the at least two access network devices.

In the embodiments of the present invention, the amplitudes included in the amplitude information are the amplitudes corresponding to different elements in each access network device, so a corresponding amplitude may be determined for every element in the access network device.

With the method provided in the embodiments of the present invention, the amplitude of each element in each access network device may be indicated according to the amplitude of each element included in the amplitude information, which not only improves the transmission performance, but also saves the signaling overhead.

It should be noted that the above embodiments may be split into new embodiments, or combined with other embodiments to form new embodiments, and the present invention does not limit the combination of the embodiments.

FIG. 3 is a flowchart of a method for reporting information provided by another illustrative embodiment of the present invention. For example, the method may be applied to the terminal shown in FIG. 1, and the method includes at least part of the following contents.

In block 301, the terminal sends channel state information to a network device. The channel state information indicates phase information and/or amplitude information of at least two access network devices.

The step in block 301 is similar to the step in block 201 in the above-mentioned embodiments shown in FIG. 2, and will not be repeated here.

In some embodiments, the phase information includes a first-type phase coefficient and a second-type phase coefficient, where the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine the phase of each element in each access network device.

Optionally, a product of the first-type phase coefficient and the second-type phase coefficient is a phase corresponding to each element in the access network device; or a sum of the first-type phase coefficient and the second-type phase coefficient is a phase corresponding to each element in the access network device.

Optionally, an interval between second-type phase coefficients corresponding to two adjacent elements in each of the at least two access network devices is a first interval, and/or an interval between second-type phase coefficients corresponding to two adjacent elements of two adjacent access network devices is the first interval.

The phase information including the first-type phase coefficient and the second-type phase coefficient in this embodiment of the present invention is similar to the phase information including the first-type phase coefficient and the second-type phase coefficient in the embodiment shown in FIG. 2 as described above, and will not be repeated here.

In some embodiments, the phase information includes phases of different elements in the at least two access network devices. An interval between phases corresponding to any two adjacent elements in the at least two access network devices is a target interval.

The phase information including the phases of different elements in the present embodiment is similar to the phase information including the phases of different elements in the above-mentioned embodiment, and will not be repeated here.

In some embodiments, the phase information is at least one of a wideband phase coefficient or a subband phase coefficient.

In some embodiments, the amplitude information includes a first-type amplitude coefficient and a second-type amplitude coefficient, where the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

Optionally, a product of the first-type amplitude coefficient and the second-type amplitude coefficient is an amplitude corresponding to each element in the access network device; or a sum of the first-type amplitude coefficient and the second-type amplitude coefficient is an amplitude corresponding to each element in the access network device.

Optionally, an interval between second-type amplitude coefficients corresponding to two adjacent elements in each of the at least two access network devices is a second interval, and/or an interval between second-type amplitude coefficients corresponding to two adjacent elements of two adjacent two access network devices is the second interval.

The amplitude information including the first-type amplitude coefficient and the second-type amplitude coefficient in the present embodiment is similar to the amplitude information including the first-type amplitude coefficient and the second-type amplitude coefficient in the embodiment shown in FIG. 2 as described above, and will not be repeated here.

In some embodiments, the amplitude information includes amplitudes of different elements in the at least two access network devices.

The amplitude information including the amplitudes of different elements in the present embodiment is similar to the amplitude information including the amplitudes of different elements in the above-mentioned embodiments, and will not be repeated here.

In some embodiments, the amplitude information is at least one of a wideband amplitude coefficient or a narrowband amplitude coefficient.

In some embodiments, the element includes at least one of the following or a combination of more than one of the following: an antenna port; a beam; a wideband; a subband; a frequency domain unit; a time domain unit.

In some embodiments, an identifier corresponding to the access network device is indicated by at least one of a resource index, a resource subset index, a resource set index, a control resource set pool index, an antenna port index, a TRP index, a TP index, an RRH index, an antenna panel index.

With the method provided by the embodiments of the present invention, the terminal reports the channel state information to the network device, so as to indicate the phase information and/or amplitude information of each access network device in the at least two access network devices, thereby ensuring that the network device determines the phase and/or amplitude of each access network device, which not only improves the transmission performance, but also saves the signaling overhead.

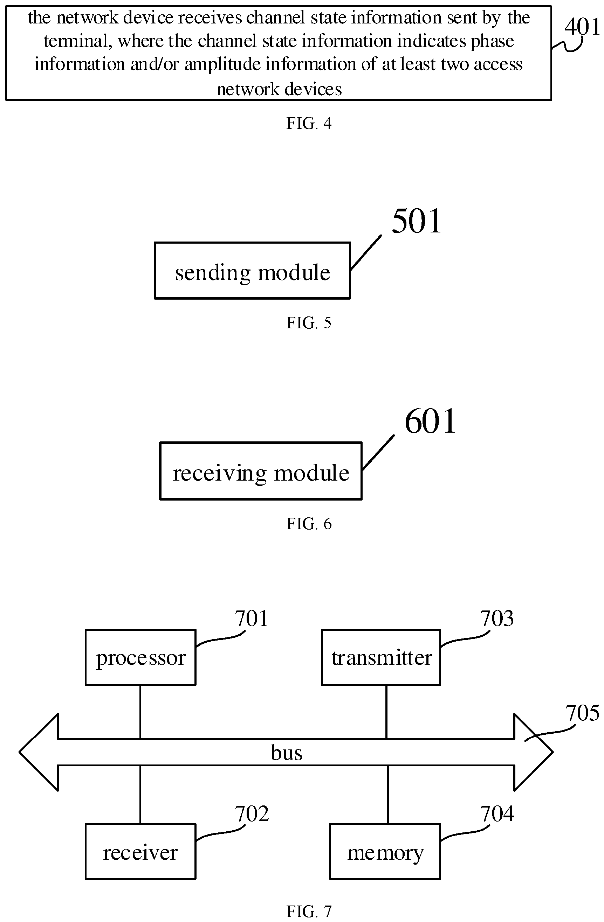

FIG. 4 is a flowchart of a method for receiving information provided by an illustrative embodiment of the present invention. For example, the method may be applied to the network device shown in FIG. 1, and the method includes at least part of the following contents.

In block 401, the network device receives channel state information sent by a terminal. The channel state information indicates phase information and/or amplitude information of at least two access network devices.

The step in block 401 is similar to the step in block 202 in the above-mentioned embodiments shown in FIG. 2, and will not be repeated here.

In some embodiments, the phase information includes a first-type phase coefficient and a second-type phase coefficient, where the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine the phase of each element in each access network device.

Optionally, a product of the first-type phase coefficient and the second-type phase coefficient is a phase corresponding to each element in the access network device; or a sum of the first-type phase coefficient and the second-type phase coefficient is a phase corresponding to each element in the access network device.

Optionally, an interval between second-type phase coefficients corresponding to two adjacent elements in each of the at least two access network devices is a first interval, and/or an interval between second-type phase coefficients corresponding to two adjacent elements of two adjacent access network devices is the first interval.

The phase information including the first-type phase coefficient and the second-type phase coefficient in this embodiment of the present invention is similar to the phase information including the first-type phase coefficient and the second-type phase coefficient in the embodiment shown in FIG. 2 as described above, and will not be repeated here.

In some embodiments, the phase information includes phases of different elements in the at least two access network devices. An interval between phases corresponding to any two adjacent elements in the at least two access network devices is a target interval.

The phase information including the phases of different elements in the present embodiment is similar to the phase information including the phases of different elements in the above-mentioned embodiment, and will not be repeated here.

In some embodiments, the phase information is at least one of a wideband phase coefficient or a subband phase coefficient.

In some embodiments, the amplitude information includes a first-type amplitude coefficient and a second-type amplitude coefficient, where the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

Optionally, a product of the first-type amplitude coefficient and the second-type amplitude coefficient is an amplitude corresponding to each element in the access network device; or a sum of the first-type amplitude coefficient and the second-type amplitude coefficient is an amplitude corresponding to each element in the access network device.

Optionally, an interval between second-type amplitude coefficients corresponding to two adjacent elements in each of the at least two access network devices is a second interval, and/or an interval between second-type amplitude coefficients corresponding to two adjacent elements of two adjacent two access network devices is the second interval.

The amplitude information including the first-type amplitude coefficient and the second-type amplitude coefficient in the present embodiment is similar to the amplitude information including the first-type amplitude coefficient and the second-type amplitude coefficient in the embodiment shown in FIG. 2 as described above, and will not be repeated here.

In some embodiments, the amplitude information includes amplitudes of different elements in the at least two access network devices.

The amplitude information including the amplitudes of different elements in the present embodiment is similar to the amplitude information including the amplitudes of different elements in the above-mentioned embodiment, and will not be repeated here.

In some embodiments, the amplitude information is at least one of a wideband amplitude coefficient or a narrowband amplitude coefficient.

In some embodiments, the element includes at least one of the following or a combination of more than one of the following: an antenna port; a beam; a wideband; a subband; a frequency domain unit; a time domain unit.

In some embodiments, an identifier corresponding to the access network device is indicated by at least one of a resource index, a resource subset index, a resource set index, a control resource set pool index, an antenna port index, a TRP index, a TP index, an RRH index, an antenna panel index.

With the method provided by the embodiments of the present invention, the terminal reports the channel state information to the network device, so as to indicate the phase information and/or amplitude information of each access network device in the at least two access network devices, thereby ensuring that the network device determines the phase and/or amplitude of each access network device, which not only improves the transmission performance, but also saves the signaling overhead.

FIG. 5 is a block diagram of an apparatus for reporting information provided by an illustrative embodiment of the present invention. As shown in FIG. 5, the apparatus includes a sending module 501 configured to send channel state information to a network device, where the channel state information indicates phase information and/or amplitude information of at least two access network devices.

In some embodiments, the phase information includes a first-type phase coefficient and a second-type phase coefficient, where the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine the phase of each element in each access network device.

In some embodiments, a product of the first-type phase coefficient and the second-type phase coefficient is a phase corresponding to each element in the access network device; or a sum of the first-type phase coefficient and the second-type phase coefficient is a phase corresponding to each element in the access network device.

In some embodiments, an interval between second-type phase coefficients corresponding to two adjacent elements in each of the at least two access network devices is a first interval, and/or an interval between second-type phase coefficients corresponding to two adjacent elements of two adjacent access network devices is the first interval.

In some embodiments, the phase information includes phases of different elements in the at least two access network devices. An interval between phases corresponding to any two adjacent elements in the at least two access network devices is a target interval.

In some embodiments, the phase information is at least one of a wideband phase coefficient or a subband phase coefficient.

In some embodiments, the amplitude information includes a first-type amplitude coefficient and a second-type amplitude coefficient, where the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

In some embodiments, a product of the first-type amplitude coefficient and the second-type amplitude coefficient is an amplitude corresponding to each element in the access network device; or a sum of the first-type amplitude coefficient and the second-type amplitude coefficient is an amplitude corresponding to each element in the access network device.

In some embodiments, an interval between second-type amplitude coefficients corresponding to two adjacent elements in each of the at least two access network devices is a second interval, and/or an interval between second-type amplitude coefficients corresponding to two adjacent elements of two adjacent two access network devices is the second interval.

In some embodiments, the amplitude information includes amplitudes of different elements in the at least two access network devices.

In some embodiments, the amplitude information is at least one of a wideband amplitude coefficient or a narrowband amplitude coefficient.

In some embodiments, the element includes at least one of the following or a combination of more than one of the following: an antenna port; a beam; a wideband; a subband; a frequency domain unit; a time domain unit.

In some embodiments, an identifier corresponding to the access network device is indicated by at least one of a resource index, a resource subset index, a resource set index, a control resource set pool index, an antenna port index, a TRP index, a TP index, an RRH index, an antenna panel index.

It should be noted that, when realizing the functions of the apparatus provided by the above-mentioned embodiments, the division of the above-mentioned functional modules is used as an example for illustration. In practical applications, the above-mentioned functions may be allocated to different functional modules according to requirements. Internal structure of the apparatus is divided into different functional modules to complete all or part of the functions described above. In addition, the apparatus provided by the above embodiments and the method embodiments belong to the same idea. Specific implementation for the apparatus embodiments is detailed in the method embodiments, and will not be repeated here.

FIG. 6 is a block diagram of an apparatus for receiving information provided by an illustrative embodiment of the present invention. As shown in FIG. 6, the apparatus includes a receiving module 601 configured to receive channel state information sent by a terminal, where the channel state information indicates phase information and/or amplitude information of at least two access network devices.

In some embodiments, the phase information includes a first-type phase coefficient and a second-type phase coefficient, where the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine the phase of each element in each access network device.

In some embodiments, a product of the first-type phase coefficient and the second-type phase coefficient is a phase corresponding to each element in the access network device; or a sum of the first-type phase coefficient and the second-type phase coefficient is a phase corresponding to each element in the access network device.

In some embodiments, an interval between second-type phase coefficients corresponding to two adjacent elements in each of the at least two access network devices is a first interval, and/or an interval between second-type phase coefficients corresponding to two adjacent elements of two adjacent access network devices is the first interval.

In some embodiments, the phase information includes phases of different elements in the at least two access network devices. An interval between phases corresponding to any two adjacent elements in the at least two access network devices is a target interval.

In some embodiments, the phase information is at least one of a wideband phase coefficient or a subband phase coefficient.

In some embodiments, the amplitude information includes a first-type amplitude coefficient and a second-type amplitude coefficient, where the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

In some embodiments, a product of the first-type amplitude coefficient and the second-type amplitude coefficient is an amplitude corresponding to each element in the access network device; or a sum of the first-type amplitude coefficient and the second-type amplitude coefficient is an amplitude corresponding to each element in the access network device.

In some embodiments, an interval between second-type amplitude coefficients corresponding to two adjacent elements in each of the at least two access network devices is a second interval, and/or an interval between second-type amplitude coefficients corresponding to two adjacent elements of two adjacent two access network devices is the second interval.

In some embodiments, the amplitude information includes amplitudes of different elements in the at least two access network devices.

In some embodiments, the amplitude information is at least one of a wideband amplitude coefficient or a narrowband amplitude coefficient.

In some embodiments, the element includes at least one of the following or a combination of more than one of the following: an antenna port; a beam; a wideband; a subband; a frequency domain unit; a time domain unit.

In some embodiments, an identifier corresponding to the access network device is indicated by at least one of a resource index, a resource subset index, a resource set index, a control resource set pool index, an antenna port index, a TRP index, a TP index, an RRH index, an antenna panel index.

It should be noted that, when realizing the functions of the apparatus provided by the above-mentioned embodiments, the division of the above-mentioned functional modules is used as an example for illustration. In practical applications, the above-mentioned functions may be allocated to different functional modules according to requirements. Internal structure of the apparatus is divided into different functional modules to complete all or part of the functions described above. In addition, the apparatus provided by the above embodiments and the method embodiments belong to the same idea. Specific implementation for the apparatus embodiments is detailed in the method embodiments, and will not be repeated here.

FIG. 7 is a schematic structural diagram of a communication device provided by an illustrative embodiment of the present invention. The communication device includes a processor 701, a receiver 702, a transmitter 703, a memory 704 and a bus 705.

The processor 701 includes one or more processing cores, and the processor 701 is configured to perform various functional applications and information processing by running software programs and modules.

The receiver 702 and the transmitter 703 may be implemented as a communication component, and the communication component may be a communication chip.

The memory 704 is connected to the processor 701 through a bus 705.

The memory 704 may be configured to store codes for at least one program, and the processor 701 is configured to execute the codes for the at least one program, so as to implement various steps in the above method embodiments.

In addition, the communication device may be a terminal or a network device. The memory 704 may be realized by any type of volatile or nonvolatile storage device or any combination thereof, the volatile or nonvolatile storage device includes, but not limited to, a magnetic disk or an optical disk, an electrically erasable programmable read-only memory (EEPROM), an erasable programmable read only memory (EPROM), a static random access memory (SRAM), a read only memory (ROM), a magnetic memory, a flash memory, and a programmable read only memory (PROM).

In an embodiment, a computer readable storage medium is further provided, and the computer readable storage medium stores executable program codes, and the executable program codes are loaded and executed by a processor to implement the method for reporting the information performed by the terminal or the method for receiving the information performed by the network device as described in the above embodiments.

In an embodiment, a chip is provided. The chip includes a programmable logic circuit and/or program instructions, and when the chip is run on a terminal or a network device, it is configured to implement the method for reporting the information or the method for receiving the information as provided in the method embodiments.

In an embodiment, a computer program product is provided. When the computer program product is executed by a processor of a terminal or a network device, the method for reporting the information or the method for receiving the information as provided by the above method embodiments is implemented.

Those skilled in the art may understand that all or part of the steps for implementing the above embodiments may be completed by hardware, or may be completed by instructing related hardware with a program. The program may be stored in a computer readable storage medium. The above-mentioned storage medium may be a read-only memory, a magnetic disk or an optical disk.

The above contents only describe optional embodiments of the present invention, and are not intended to limit the present invention. Any modifications, equivalent replacements, improvements made within the spirit and principle of the present invention shall be included in the protection of the present invention.

## Claims

1. A method for reporting information, performed by a terminal, comprising:
sending channel state information to a network device, wherein the channel state information indicates phase information and/or amplitude information of at least two access network devices.

2. The method according to claim 1, wherein the phase information comprises a first-type phase coefficient and a second-type phase coefficient,
wherein the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine a phase of each element in each access network device.

3. The method according to claim 2, wherein
a product of the first-type phase coefficient and the second-type phase coefficient is a phase corresponding to each element in the access network device;
or
a sum of the first-type phase coefficient and the second-type phase coefficient is a phase corresponding to each element in the access network device.

4. The method according to claim 2 or 3, wherein an interval between second-type phase coefficients corresponding to two adjacent elements in each of the at least two access network devices is a first interval, and/or an interval between second-type phase coefficients corresponding to two adjacent elements of two adjacent access network devices is the first interval.

5. The method according to claim 1, wherein the phase information comprises phases of different elements in the at least two access network devices;
wherein an interval between phases corresponding to any two adjacent elements in the at least two access network devices is a target interval.

6. The method according to any one of claims 2 to 5, wherein the phase information is at least one of a wideband phase coefficient or a subband phase coefficient.

7. The method according to claim 1, wherein the amplitude information comprises a first-type amplitude coefficient and a second-type amplitude coefficient,
wherein the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

8. The method according to claim 7, wherein
a product of the first-type amplitude coefficient and the second-type amplitude coefficient is an amplitude corresponding to each element in the access network device;
or
a sum of the first-type amplitude coefficient and the second-type amplitude coefficient is an amplitude corresponding to each element in the access network device.

9. The method according to claim 7 or 8, wherein an interval between second-type amplitude coefficients corresponding to two adjacent elements in each of the at least two access network devices is a second interval, and/or an interval between second-type amplitude coefficients corresponding to two adjacent elements of two adjacent two access network devices is the second interval.

10. The method according to claim 1, wherein the amplitude information comprises amplitudes of different elements in the at least two access network devices.

11. The method according to any one of claims 7 to 10, wherein the amplitude information is at least one of a wideband amplitude coefficient or a narrowband amplitude coefficient.

12. The method according to any one of claims 1 to 11, wherein an element comprises at least one of the following or a combination of more than one of the following:
an antenna port;
a beam;
a wideband;
a subband;
a frequency domain unit; or
a time domain unit.

13. The method according to any one of claims 1 to 12, wherein an identifier corresponding to the access network device is indicated by at least one of a resource index, a resource subset index, a resource set index, a control resource set pool index, an antenna port index, a transmission reception point (TRP) index, a transmission point (TP) index, a remote radio header (RRH) index, an antenna panel index.

14. A method for receiving information, performed by a network device, comprising:
receiving channel state information sent by a terminal, wherein the channel state information indicates phase information and/or amplitude information of at least two access network devices.

15. The method according to claim 14, wherein the phase information comprises a first-type phase coefficient and a second-type phase coefficient,
wherein the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine a phase of each element in each access network device.

16. The method according to claim 15, wherein
a product of the first-type phase coefficient and the second-type phase coefficient is a phase corresponding to each element in the access network device;
or
a sum of the first-type phase coefficient and the second-type phase coefficient is a phase corresponding to each element in the access network device.

17. The method according to claim 15 or 16, wherein an interval between second-type phase coefficients corresponding to two adjacent elements in each of the at least two access network devices is a first interval, and/or an interval between second-type phase coefficients corresponding to two adjacent elements of two adjacent access network devices is the first interval.

18. The method according to claim 14, wherein the phase information comprises phases of different elements in the at least two access network devices;
wherein an interval between phases corresponding to any two adjacent elements in the at least two access network devices is a target interval.

19. The method according to any one of claims 15 to 18, wherein the phase information is at least one of a wideband phase coefficient or a subband phase coefficient.

20. The method according to claim 14, wherein the amplitude information comprises a first-type amplitude coefficient and a second-type amplitude coefficient,
wherein the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

21. The method according to claim 20, wherein
a product of the first-type amplitude coefficient and the second-type amplitude coefficient is an amplitude corresponding to each element in the access network device;
or
a sum of the first-type amplitude coefficient and the second-type amplitude coefficient is an amplitude corresponding to each element in the access network device.

22. The method according to claim 20 or 21, wherein an interval between second-type amplitude coefficients corresponding to two adjacent elements in each of the at least two access network devices is a second interval, and/or an interval between second-type amplitude coefficients corresponding to two adjacent elements of two adjacent two access network devices is the second interval.

23. The method according to claim 14, wherein the amplitude information comprises amplitudes of different elements in the at least two access network devices.

24. The method according to any one of claims 20 to 23, wherein the amplitude information is at least one of a wideband amplitude coefficient or a narrowband amplitude coefficient.

25. The method according to any one of claims 14 to 24, wherein an element comprises at least one of the following or a combination of more than one of the following:
an antenna port;
a beam;
a wideband;
a subband;
a frequency domain unit; or
a time domain unit.

26. The method according to any one of claims 14 to 25, wherein an identifier corresponding to the access network device is indicated by at least one of a resource index, a resource subset index, a resource set index, a control resource set pool index, an antenna port index, a transmission reception point (TRP) index, a transmission point (TP) index, a remote radio header (RRH) index, an antenna panel index.

27. An apparatus for reporting information, comprising:
a sending module configured to send channel state information to a network device, wherein the channel state information indicates phase information and/or amplitude information of at least two access network devices.

28. The apparatus according to claim 27, wherein the phase information comprises a first-type phase coefficient and a second-type phase coefficient,
wherein the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine a phase of each element in each access network device.

29. The apparatus according to claim 28, wherein
a product of the first-type phase coefficient and the second-type phase coefficient is a phase corresponding to each element in the access network device;
or
a sum of the first-type phase coefficient and the second-type phase coefficient is a phase corresponding to each element in the access network device.

30. The apparatus according to claim 27, wherein the phase information comprises phases of different elements in the at least two access network devices;
wherein an interval between phases corresponding to any two adjacent elements in the at least two access network devices is a target interval.

31. The apparatus according to claim 27, wherein the amplitude information comprises a first-type amplitude coefficient and a second-type amplitude coefficient,
wherein the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

32. The apparatus according to claim 31, wherein
a product of the first-type amplitude coefficient and the second-type amplitude coefficient is an amplitude corresponding to each element in the access network device;
or
a sum of the first-type amplitude coefficient and the second-type amplitude coefficient is an amplitude corresponding to each element in the access network device.

33. The apparatus according to claim 27, wherein the amplitude information comprises amplitudes of different elements in the at least two access network devices.

34. The apparatus according to any one of claims 27 to 33, wherein an element comprises at least one of the following or a combination of more than one of the following:
an antenna port;
a beam;
a wideband;
a subband;
a frequency domain unit; or
a time domain unit.

35. An apparatus for receiving information, comprising:
a receiving module configured to receive channel state information sent by a terminal, wherein the channel state information indicates phase information and/or amplitude information of at least two access network devices.

36. The apparatus according to claim 35, wherein the phase information comprises a first-type phase coefficient and a second-type phase coefficient,
wherein the first-type phase coefficient indicates a phase coefficient corresponding to each of the at least two access network devices, and the second-type phase coefficient indicates a phase coefficient corresponding to each element in each access network device, and the first-type phase coefficient and the second-type phase coefficient are used to determine a phase of each element in each access network device.

37. The apparatus according to claim 36, wherein
a product of the first-type phase coefficient and the second-type phase coefficient is a phase corresponding to each element in the access network device;
or
a sum of the first-type phase coefficient and the second-type phase coefficient is a phase corresponding to each element in the access network device.

38. The apparatus according to claim 35, wherein the phase information comprises phases of different elements in the at least two access network devices;
wherein an interval between phases corresponding to any two adjacent elements in the at least two access network devices is a target interval.

39. The apparatus according to claim 35, wherein the amplitude information comprises a first-type amplitude coefficient and a second-type amplitude coefficient,
wherein the first-type amplitude coefficient indicates an amplitude coefficient corresponding to each of the at least two access network devices, and the second-type amplitude coefficient indicates an amplitude coefficient corresponding to each element in each access network device, and the first-type amplitude coefficient and the second-type amplitude coefficient are used to determine an amplitude of each element in each access network device.

40. The apparatus according to claim 39, wherein
a product of the first-type amplitude coefficient and the second-type amplitude coefficient is an amplitude corresponding to each element in the access network device;
or
a sum of the first-type amplitude coefficient and the second-type amplitude coefficient is an amplitude corresponding to each element in the access network device.

41. The apparatus according to claim 35, wherein the amplitude information comprises amplitudes of different elements in the at least two access network devices.

42. The apparatus according to any one of claims 35 to 41, wherein an element comprises at least one of the following or a combination of more than one of the following:
an antenna port;
a beam;
a wideband;
a subband;
a frequency domain unit; or
a time domain unit.

43. A terminal, comprising:
a processor; and
a transceiver coupled to the processor;
wherein the processor is configured to load and perform executable instructions to implement the method for reporting the information according to any one of claims 1 to 13.

44. A network device, comprising:
a processor; and
a transceiver coupled to the processor;
wherein the processor is configured to load and perform executable instructions to implement the method for receiving the information according to any one of claims 14 to 26.

45. A computer readable storage medium having stored therein executable program codes that, when loaded and performed by a processor, implement the method for reporting the information according to any one of claims 1 to 13 or the method for receiving the information according to any one of claims 14 to 26.

46. A computer program product that, when executed by a processor of a low-capability terminal or a network device, causes the method for reporting the information according to any one of claims 1 to 13 or the method for receiving the information according to any one of claims 14 to 26 to be implemented.
